# EUROPEAN PATENT APPLICATION

(11) **EP 1 961 687 A2**
(43) Date of publication of application: **27.08.2008**
(21) Application number: 08101483.9
(22) Date of filing: 11.02.2008
(51) Int. Cl.: B65H 67/06

(54) **Device for distinguishing spools on the basis of their yarn content**

(30) Priority: 20.02.2007 IT MI20070328
(71) Applicant: Savio Macchine Tessili S.p.A., 33170 Pordenone (IT)
(72) Inventor: Badiali, Roberto, 33170 Pordenone (IT); Gobbato, Mauro, 30026 Portogruaro (Venezia) (IT)
(74) Representative: Fusina, Gerolamo

(57) **Abstract**

Device and process for recognizing and distinguishing the spools (6) carried by plates (10) at the outlet of a bobbin-winding station on the basis of their yarn content, its image being taken by a photocamera (4) used with the diascopic technique, the photocamera (4) bidimensionally processing the image taken to distinguish the spools (6) and giving a signal to suitably direct the plate (10) on the basis of the observation effected.

## Description

The present invention relates to a device and process for moving and controlling the spools circulating in an automatic bobbin-winder. The production technique of yarns in a first spinning step - typically ring spinning which produces yarn on spools - followed by a second bobbin-winding step in which the yarn is unwound from its spool, its defects corrected and rewound onto a bobbin, is widely used in industrial practice. The bobbin-winding operation is effected in bobbin-winders situated downstream of the spinning machines.

In the most recently conceived bobbin-winders the technique of moving spools and tubes is widely prevalent, using plate supports to be positioned on conveyor belts or similar moving service organs of the machine to carry said spools and tubes individually to and from the bobbin-winding units, supporting them in an upright position on their plate during the whole moving and operating cycle of the spool and tube.

These plates generally consist of a disk base which carries a vertical central pin, in which the tube of the spool is inserted, thus transferring and running the spools practically without touching them, only handling the plates, without the spools being touched or rubbed against and consequently without them being dirtied or deteriorating in contact with the organs of the machine.

The automatic bobbin-winder generally consists of a series of bobbin-winding stations or units aligned and served by common service and control organs. On the front of the machine, there is a main discharge run of the exhausted tubes and on the back of the machine a main feeding run of the spools to be subjected to bobbin-winding. These runs are delimited with directional guides for the plates and are moved with conveyors, generally belts or straps, which serve all the aligned bobbin-winding stations. Between the two main runs there are transversal runs corresponding to the single bobbin-winding units, in which the spools operate. These moving schemes are described, for example in European patents 374.403, 374.404, 402.630 and in US patents 4,953,798 and 5,484,115.

The bobbin-winding stations or units generally receive - from a specific station for the preparation of spools - plates which carry prepared, fresh or recycled spools, with their initial skein-end already arranged in a pre-established position, from which said bobbin-winding unit is capable of capturing said skein-end and initiate the winding of the spool activated according to the bobbin-winding or spooling operation. It substantially consists of unwinding the yarn being fed from the spool and cleaning it of its defects with respect to mechanical consistency or dimension. In its passage from the spool to the bobbin produced with the cleaned thread, the yarn is controlled with a slubcatcher which reveals its dimensional faults relating to both its transversal dimension and length. The slubcatcher controls the cutting of the thread every time the dimension of the thread revealed does not fall within the range of acceptability dimensions of the thread according to its calibration, thus stopping the process underway. On the basis of the length of the fault revealed by the thread an adequate length is removed to eliminate the whole of the suspected section, sucking it with service mouths. It may also happen, even if less frequently, that the thread is spontaneously torn due to a weakened section. The thread being processed is in fact subjected to considerable tension as the thread wound from the operating spool forms a balloon rotating at a high speed: it is consequently subjected to tension due to the centrifugal force which forms the practical limit to its linear operating rate.

The bobbin-winding unit is equipped with a thread-joiner which restores the continuity of the thread, after removing the faulty sections. The bobbin-winding unit is also provided with search organs of the two skein-ends, the skein-end on the side of the spool and the skein-end on the side of the bobbin, which capture them and carry them to said thread-joiner. They generally consist of suction mouths which move with rotational excursions around a horizontal axis.

After receiving the skein-ends, said thread-joiner, from which the mouths have already sucked the length required for the faulty section, prepares their ends and joins them. Once the joining operation is complete, the thread-joiner releases the thread to continue its bobbin-winding from spool to bobbin.

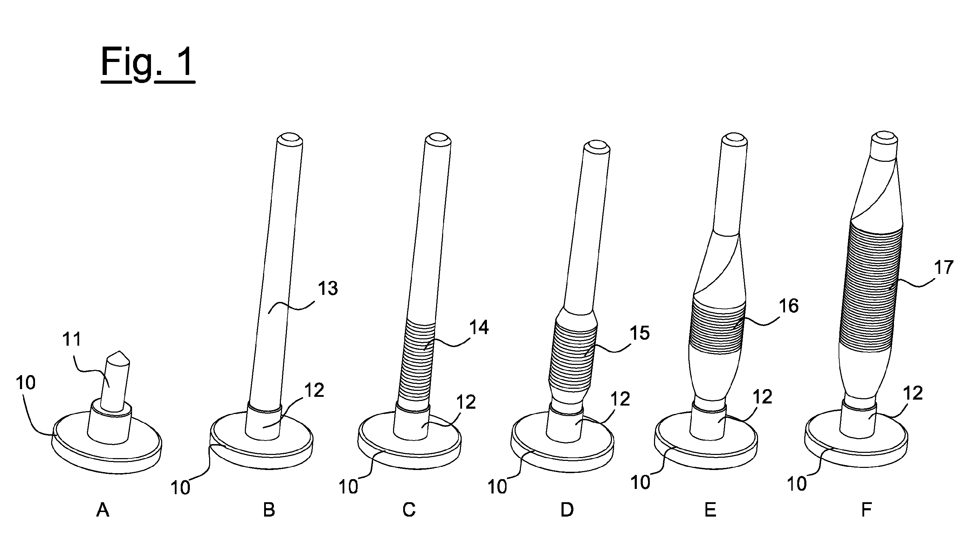

With each interruption of the thread, the bobbin-winding unit handles the intervention autonomously and restarts the bobbin-winding, of which the preliminary operation consists in capturing the skein-ends on the side of the spool and on the side of the bobbin. The technical problem relating to the bobbin-winding and which is faced in the present invention, essentially arises when the bobbin-winding unit effects the restarting procedure of the bobbin-winding without success. The plate with the possible spool from which the skein-end cannot be captured, is discharged, but in order to decide how and where to send it, it is necessary to know the object carried by the plate to be discharged. The possible cases are described hereunder with reference to figure 1.

Position A shows a plate 10 without either spool or tube on its pin 11. Said plate must therefore be sent back for being re-used for carrying spools to the bobbin-winder or spinner.

Position B shows a plate 10 which carries a tube 13 resting on the neck 12 of its pin 11. Said tube is completely exhausted and must therefore be sent back to the discharge station of tubes which must be returned to the spinning machine for a new spool to be wound thereon.

Position C shows a plate 10 which carries a tube 14 resting on the neck 12 of its pin 11. Said tube 14 is not completely exhausted but still has a few coils of wound thread. It is normally called "dirty tube", and must be sent to an automatic or manual cleaning station, which removes the residual winding from the dirty tube. The plate is then sent to the discharge station of the tubes which are returned to the spinning machine for a new spool to be wound thereon.

Position D shows a plate 10 which carries a tube 15 resting on the neck 12 of its pin 11. Said tube 15 still carries, in its lower part, a quantity of wound thread which modifies the diameter of the tube revealed by a few millimeters. This is normally called "bottom" and, depending on the quality of the yarn being processed, must be sent directly for cleaning if the yarn has a low value or, if, on the other hand, it is a high-quality yarn, it must be sent back to the preparation station of the spools to try and recuperate the yarn still wound.

Positions E and F show a plate 10 which carries a spool resting on the neck 12 of its pin 11. Said plate carries - in position E - a spool 16 from which a significant quantity of yarn has already been wound: it is normally called "half spool". The plate - in position F - on the other hand, carries a spool 17 still complete, from which it has not been possible to capture the skein-end and wind the yarn: it is simply called "cop" . In both cases, they must be sent back to the spool preparation station. If the automatic preparation still does not give any result, manual preparation is generally effected.

Revealing devices of the yarn on the spools essentially of the mechanical and optical type can be found in the known art. In the more widely-diffused devices of the mechanical type, the detecting function of the yarn on the spools is effected in two separate stations. In a first station, the spools and tubes are separated. The plate with the spool is passed near a rod gauge: if there is still a substantial quantity of yarn on the spool, it strikes the gauge which in turn is connected to a sensor; the plate is classified as a spool and is sent back in the machine to the preparation station. If, on the other hand, the gauge is not touched by the plate, it is classified as a tube. In the second station, the selection is effected between clean tubes and "dirty" tubes. In this station, the plate with the tubes selected in the previous station are stopped: the surface of the tube is examined with a comb which approaches the surface of the tube and descends parallel to its axis. If there is still yarn wound on the tube, the comb is withheld and is not able to complete its descent and activate a run-end sensor. In the presence of a signal, the tube is classified as clean and is sent directly for its reuse. In the absence of a signal, the tube is classified as dirty and is sent for cleaning.

This detection system is not very reliable in detecting "dirty" tubes with only a few residual coils of yarn and can leave pieces of yarn which are wound with the new yarn in the subsequent winding. The comb is subject to deterioration and is not very adaptable to tubes having different dimensions.

Sensors of the optical type, for example according to European patent EP 979.795, resort to a detection photocamera of the light reflected from the spool illuminated with one or more light sources. The detection is based on the fact that the light reflection values from the tube and wound yarn differ considerably. The digital data of the image obtained are then analyzed and processed to identify the luminosity passages which define a profile with the presence of wound yarn. This detection system is complex and is influenced by the presence of environmental light: to avoid this, it should be effected in a black box. The most difficult and less reliable detection, also for sensors of the optical type, is that which distinguishes empty tubes from "dirty" tubes with few yarn coils.

The invention is described herein with reference to one of its embodiments in an automatic bobbin-winder with plate transportation.

The present invention, in its most general version of a detection device of the presence of yarn on a spool, is defined in the first claim. Its variants are defined in the dependent claims from 2 to 5.

The present invention is its widest version of a process for the detection of the presence of yarn on a spool, is defined in the sixth claim. Its variants or preferred embodiments are defined in the dependent claims from 7 to 12.

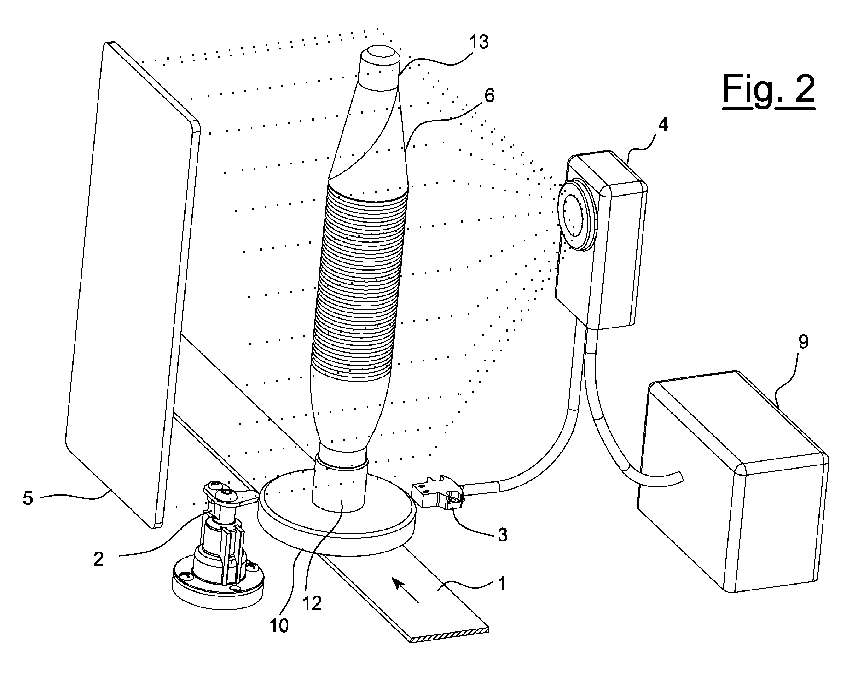

The characteristics and advantages of the detection device of the presence of yarn on a spool coming from a bobbin-winding unit according to the present invention will appear more evident from the description of one of its typical illustrative but non-limiting embodiments, illustrated in figures 1 and 2.

Figure 1 shows the possible cases of the plate configuration, from the empty plate to the plate carrying a new spool 17, and illustrates the technical problem faced with the presence invention.

Figure 2 shows in a perspective view - for illustrative but non-limiting purposes - a typical embodiment of the device according to the invention in an automatic bobbin-winder with conveyor belt transportation for the detection of yarn wound onto spools in transit during transportation. The following elements are shown in the figure:
1 - Conveyor belt for the plates. Longitudinal guides which keep the plate in the operating direction and in the centre of the belt, are associated with the conveyor belt.
2 - Stopping device of the plate on the belt, which opposes a mushroom element which prevents the transit of the plate.
3 - Detection photocell of the presence of the stopped plate.
4 - Optical detection sensor of the image of the spool carried by the plate.
5 - Lighting panel.
6 - General spool, for which it must be established whether it is an empty tube 13, a dirty tube 14, a bottom 15, a half-cop 16 or a new spool 17.
10 - Plate
13 - Tube
9 - Control unit of the bobbin-winder, connected to the detection device 4, generally consisting of an electronic card, for suitably directing the plate in the bobbin-winder on the basis of its detection.

The detection procedure is effected as follows. The stopping device 2 is activated and stops the arriving plate 10 carried by the conveyor belt 1 on which there is the spool 6 to be detected. The plate 10 is stopped in a position in which the spool 6 being examined is situated between the optical sensor 4 and the lighting panel 5, which can be continually switched on or switched on only in the presence of a plate. The lighting panel can be produced with a luminous opaque surface, or, according to a preferred embodiment of the invention, with a panel consisting of a series of luminous points, for example led, distributed on its surface. The led panel is charged with a low D.C. voltage, it does not require substantial maintenance and can be switched on only at the moment of filming.

The size of the lighting panel preferably exceeds the dimensions of the general spool 6 to be recognized and distinguished, so that it stands out in diascopy against the surface of the panel 5. The surface of said lighting panel is consequently preferably within the range of 200-480 mm in width by 400-600 mm in height, depending on the dimension of the spools to be put into operation.

The photocell 3 reveals the presence of the plate in the station: the optical sensor 4 receives the start and synchronization signal for revealing the spool 6.

The optical sensor 4, preferably consisting of a high definition digital photocamera, acquires the image of the object 6 carried by the plate which is memorized in the form of a series of pixels in the memory of the same sensor and then processed within the same sensor. This contains the processing functions of the image by algorithms of processing software.

From the result of the processing with said algorithms, the sensor 4 distinguishes the six types of image revealed for the object present on the plate from A to F illustrated in figure 1: plate alone, plate with exhausted tube, plate with dirty tube, plate with bottom, plate with half-cop and plate with new spool.

The sensor 4 transmits a signal indicating the type of detection effected by the electronic card 9, which in turn unblocks the stopping device 2 and releases the plate examined, directing it on the basis of the detection effected. The card 9 re-positions the stopping device 2 to restart the cycle for the next plate in arrival.

Consolidated techniques and algorithms known to experts in the field are available in the state of the art for the processing of the image. Each image revealed with the photocamera 4 is flat and represented by a pixel matrix, i.e. a series of luminous points, whose dimension is defined by the resolution allowed by the photocamera itself. Each pixel is defined by its flat coordinates and luminosity, i.e. by its quantity of "grey", generally represented - if the image is in black and white - by a number from 0 to 255 indicating its grey level: if the number is 0 the point is black, if the number is 255 the point is white and the intermediate numbers express the more or less dark grey level.

According to the present invention, resort is made to processing means which comprise algorithms for profile, binarization and for the edges to be effected in sequence. The analysis which is carried out is always bidimensional.

The profile algorithm is aimed at delimiting and reducing the number of pixels considered useful for the detection and consequently reducing the software processing. The present invention contemplates stopping the plate always in the same position, positioning it in the centre of the image. If the plate is always stopped with its spool 6 in the centre of the image revealed, it is sufficient to only use the processing algorithms on the points in which the edges of the image of the object carried by the plate and revealable in the cases from A to F according to figure 1, can be positioned and not on the points in which these edges cannot be found. Also in this case the calibration for revealing the possible pixels is based on an "una tantum" detection on cases A-F having the form of the general spool 6. If the plate always has the same position, it is therefore possible to operate only on the centre of the image, with much fewer pixels to be processed.

The second processing step is the binarization of the image: the image in black and white consists of a series of points with various grey levels which must be distinguished with two thresholds until the difference between the background, tube and thread present is revealed.

According to the present invention, the binarization algorithm is applied twice: the first time to identify the profile of the spool being examined on the basis of a first threshold, the second to distinguish the yarn from the tube within the profile, on the basis of a second threshold. The algorithm for binarization for identifying the profile of the spool is aimed at distinguishing which pixels should be considered black and belonging to the image revealed and which should be considered white and belonging to the background: in the present invention a binarization with a fixed threshold is used. With the diascopic technique according to the present invention - i.e. with the plate being examined situated between the lighting panel 5 and the sensor 4 - the distinguishing binarization function is much more enhanced as the plate and its spool appear much darker than the background and it is therefore much easier to reveal the threshold and surroundings of the image of the spool 6.

Once the image of the profile of the spool has been acquired, it is possible to determine - on the basis of the contrast within the profiles - which pixels should be considered lighter and which darker and belonging to the yarn or tube.

The binarization algorithm comprises the following steps:
- the gradient of the image revealed is first evaluated, i.e. the light variation between adjacent pixels in both line and column within which the distinguishing threshold must be established,
- a histogram of the image is processed, i.e. the concentration of the pixels with the same light value is evaluated,
- the threshold (Otsu algorithm) is determined by evaluating the grey distribution between the background and the object to be revealed, with an "una tantum" detection with the panel 5 switched off which acts as calibration.

The algorithm for the edges, normally called "edge image", has the purpose of only processing an image of the edges in which there is the passage of the edge threshold. This image is processed to obtain a grey level of each point which is proportional to the slope and amplitude of a rise front of the luminosity possibly present in that point. Numerous algorithms are available for this type of processing: for example those of Marr-Hildreth and Canny. With several operators together it is possible to obtain greater detection details. These algorithms are based on the local maximum of the derivative of the gradient and with a direction perpendicular to the direction of the edge. The algorithm of the edges comprises the following steps:
- filtering of the image, a local average of its points is made (Gaussian filter) to eliminate the effect of optical phenomena of the diffractive type,
- the Laplacian is calculated on the image thus filtered: a peak of the first derivative of the luminosity is generated in correspondence with an edge (where there is a strong light variation),
- the zero crossing is then calculated in the second derivative of the image of the previous point.

In practice, once an image has been obtained with a grey scale, the edges of the spool with respect to the background are first defined. The first line or column is sought in which there is a predefined light grey pixel as background (search for the edges) and the profile of the spool is obtained. Once the spool has been obtained, it is possible to distinguish the thread from the tube by contrast. The percentage of pixels with a luminosity corresponding to the thread on the whole image defines the type from C to F. In the case of a clean tube (B) or plate alone (A) no contrast is revealed. The contrast can be enhanced by modifying the opening times of the diaphragm.

With respect to detection systems of yarn on spools available in the known art, the spool detection device according to the present invention offers considerable advantages and among these the following are worth mentioning.

The resolution which can be obtained from the sensor operating with lighting in diascopy also allows a few coils of thread wound onto the tube, to be revealed, which represents the most difficult forms of detection. Once the sensor of the type of spools, processed on the spinner upstream and which arrive on their plates, has been calibrated "una tantum" at the beginning of the operating process, the sensor operates without the intervention of operators and does not require frequent interventions, as required, on the other hand, by mechanical devices. The analysis of the general spools 6 is effected in a single station, with an improvement in the times and analysis procedures. The use of led retroillumination panels operates with D.C. voltages already present in the machine and with low energy consumptions, especially if they are only switched on at the moment of observation.

## Claims

1. A device for recognizing general spools (6) carried by plates (10) at the outlet of a bobbin-winding station and for distinguishing them, determining one by one if they are a plate alone (10), an empty tube (13), a dirty tube (14) of yarn, a bottom (15), a half-cop (16) or a new spool (17) comprising a light source for illuminating the spool (6) to be examined, filming means for revealing, with a photocamera, the image of the general spool (6) to be examined and means for analyzing the signals of the image revealed, **characterized in that** the light source consists of a lighting panel (5), used with the diascopy technique, with the plate with the spool (6) being examined situated between the panel (5) and the optical sensor with a photocamera (4), said photocamera (4) comprising means for distinguishing the general spool (6) and for emitting a signal indicating the type of observation effected to the control unit (9), to which said photocamera (4) is connected, so that the control unit (9) can suitably direct the plate (10) on the basis of the observation effected on the general spool (6).

2. The device for recognizing spools according to claim 1, **characterized in that** it comprises stopping means (2) for stopping the plate (10) on its conveyor belt (1), the plate (10) always being stopped in the same position, positioning the general spool (6) to be revealed in the centre of the image.

3. The device for recognizing spools according to claim 1, **characterized in that** it comprises a high definition digital photocamera (4), which in turn comprises means for acquiring the image of the general spool (6), memorizing means in the form of a series of pixels and processing means of the image revealed, which effect in sequence algorithms for profile, binarization and for the edges.

4. The device for recognizing spools according to claim 1, **characterized in that** it comprises a lighting panel (5) produced with a panel consisting of a series of light points, consisting of a series of leds distributed on its surface.

5. The device for recognizing spools according to claim 1, **characterized in that** the surface of said lighting panel is within the range of 200-480 mm in width by 400-600 mm in height.

6. A process for recognizing general spools (6) carried by plates (10) at the outlet of a bobbin-winding station and for distinguishing them, determining one by one if they are a plate alone (10), an empty tube (13), a dirty tube of yarn (14), a bottom (15), a half-cop (16) or a new spool (17) comprising the phases of illuminating the spool (6) to be examined, revealing, with a photocamera, the image of the general spool (6) to be examined and analysis of the signals of the image revealed, **characterized in that** the lighting (5) is effected with the diascopy technique, with the plate with the spool (6) being examined situated between the lighting panel (5) and an optical sensor with a photocamera (4), said photocamera (4) distinguishing the general spool (6) and emitting a signal indicating the type of detection effected to the control unit (9), so that it can suitably direct the plate (10) in the bobbin-winder on the basis of the detection effected on the general spool (6).

7. The process for recognizing spools according to claim 6, **characterized in that** the plate (10) is always stopped in the same position, positioning the general spool (6) to be revealed in the centre of the image.

8. The process for recognizing spools according to claim 6, **characterized in that** the revealing of the image is effected with a high definition digital photocamera (4), which acquires the image of the general spool (6), memorizes in the form of a series of pixels and processes the image revealed, effecting in sequence algorithms for profile, binarization and for the edges, with a bidimensional analysis.

9. The process for recognizing spools according to claims 7 and 8, **characterized in that** the profile algorithm is aimed at using processing algorithms only on the points in which the edges of the image of the object carried by the plate (10) can be positioned and consists in a calibration for revealing "una tantum" where said edges can be found in the cases from A to F of the possible configurations of the general spool (6).

10. The process for recognizing spools according to claim 8, **characterized in that** the binarization algorithm comprises the steps of evaluating the gradient of the image revealed, processing of the histogram of the image, determination with the Otsu algorithm evaluating the grey distribution between the background and the object to be revealed.

11. The process for recognizing spools according to claim 10, **characterized in that** the binarization algorithm is applied twice: the first time for identifying the profile of the spool being examined on the basis of a first threshold, the second for distinguishing the yarn from the tube, within the profile identified, on the basis of a second threshold.

12. The process for recognizing spools according to claim 8, **characterized in that** the edge algorithm comprises filtering the image with a Gaussian filter, calculating the Laplacian to identify the peak of the first derivative of the luminosity, and zero crossing in the second derivative of the image of the previous point.
